# EUROPEAN PATENT SPECIFICATION

(11) **EP 2 759 197 B1**
(45) Date of publication and mention of the grant of the patent: **23.09.2015**
(21) Application number: 14150444.9
(22) Date of filing: 08.01.2014
(51) Int. Cl.: A01K 1/01, A01K 1/015

(54) **Stable floor**
Stallboden
Sol d'étable

(30) Priority: 23.01.2013 NL 2010168
(43) Date of publication of application: 30.07.2014
(73) Proprietor: Orriens, Rene Hermanus Wilhelmus, 7156 JA Beltrum (NL)
(72) Inventor: Orriens, Rene Hermanus Wilhelmus, 7156 JA Beltrum (NL)
(74) Representative: 't Jong, Bastiaan Jacob

(56) References cited:
- EP-A1- 0 923 857
- DE-C- 194 352
- FR-A- 346 448
- NL-A- 8 200 150
- US-A- 3 693 782
- US-A- 3 859 962

## Description

The invention relates to an animal accommodation floor, see e.g. document EP-A-0923857.

Many different floor slabs are known from the prior art. These floor slabs can be divided into two types: open grating plates and closed floor slabs.

In the case of open grating plates the floor parts are placed on top of a pit. The floor parts are provided with slots, whereby urine and faeces of the animals can drop via the slots into the pit. The drawback of open grating plates is that ammonia can enter the animal accommodation freely from the pit, with the result that the climate for the animals deteriorates. This emission of ammonia is also undesirable in respect of environmental legislation.

The other type of floor slab are closed floor slabs. Here the urine and faeces drop onto the floor slabs and remain there. A manure scraper is then pulled periodically over the floor slabs so that the faeces can be drawn into a pit opening at the end of the manure passage formed by the floor slabs.

It is also possible to place the floor slabs on a pit, wherein a gap is left open between the floor slabs. The faeces can then be drawn via these gaps into the pit by the manure scraper. Because the floor slabs are closed and the only direct connection to the pit is via the gaps, emission of ammonia is limited. In addition, it is possible to also arrange flaps in the gaps, thereby further limiting the emission of ammonia.

In the case the closed floor slabs lie against each other, the emission of ammonia is limited to maximum extent because there need be no direct connection to the storage of urine and faeces. When the faeces and urine have been drawn into the pit opening, they can there be pumped to for instance a storage tank.

It is desirable here to separate the thick fraction (faeces) from the thin fraction (substantially urine). It is known for this purpose to provide a manure channel in the slabs in the centre of the manure passage. The floor slabs are provided here with an incline whereby the urine flows directly into the central manure channel and can flow away to the pit opening. Periodically the thick fraction is then removed separately with the manure scraper and can be processed separately.

In practice this embodiment with a central manure channel has a number of drawbacks. The width of the manure channel thus has to remain limited because the animals could otherwise step with their legs into the channel. The discharge capacity of the manure channel is hereby thus limited.

It is usual for stalls and/or feeding fences to be provided for the animals on either side of the manure passage. The faeces of the animals therefore drop more toward the edge of the manure passage than in the centre. Because the urine is drained quickly to the centre because of the incline, the faeces close to the edges dry relatively quickly and cake more easily. This makes scraping the floor slabs clean with a manure scraper more difficult.

It is now an object of the invention to reduce or even obviate the above stated drawbacks.

This objective is achieved according to the invention with an animal accommodation floor as defined in claim 1.

The floor slab according to the invention has an incline running downward from the centre to the edges. This in contrast to the prior art, wherein the incline runs downward from the edges to the centre.

With the floor slab according to the invention it is not necessary to provide a channel in the centre of the floor slab for the purpose of discharging urine. Because of the downward incline to both sides of the floor slab two channels can now be provided on either side of the floor slab. If the channels have the same dimensions as the prior art channels, the discharge capacity is hereby doubled.

Another advantage is that the urine flows toward the edges, which is precisely where most of the faeces comes to lie. These faeces will hereby dry out less quickly, whereby scraping the floor slabs clean will proceed more easily.

A further advantage of the floor slab according to the invention is the strength of the floor slab. Because the upper surface of the floor slab is not provided with a manure channel as in the prior art, the floor slab is stronger and can thereby span greater distances. In the prior art floor slabs an additional foundation beam is often used for support in the centre at the position of the manure channel. This foundation beam can be dispensed with in the floor slab according to the invention.

In an embodiment of the floor slab according to the invention a recess is provided in the width edges at least close to the underside and over the whole width in order to form a manure channel.

Together with an adjacent floor part of for instance a stall, this recess forms a manure channel. By providing the recess on the underside the distance to the adjacent floor part can remain small on the upper side of the floor slab. A narrow inflow gap is thus provided, while the channel itself can be large.

The floor slab preferably has a flat underside, although it is also possible to obtain an incline downward from the centre to both sides in the upper surface while the underside does not take a flat form. It is however recommended in the manufacture of the floor slabs to have a flat underside.

The floor slab according to the invention is preferably formed from reinforced concrete.

In an embodiment of the floor slab according to the invention the upper surface of the floor slab can in addition be provided with a profiling. This profiling can provide for more grip for the animals and for a better discharge of the urine.

The profiling can for instance consist of grooves becoming deeper from the central zone toward the edges. The discharge of urine via these grooves is hereby further improved.

A flexible flap can optionally be provided on the width edges of the floor slab, this flap lying with a free end against the adjacent floor part in the placed situation of the animal accommodation floor. The flexible flap thus closes the channel, while urine can still flow into the channel. The flexible flap forms a valve and can also be embodied in other ways.

A preferred embodiment of the animal accommodation floor according to the invention comprises a manure scraper movable in longitudinal direction of the manure passage for the purpose of scraping the floor slabs clean.

Protrusions are preferably provided on both ends of the manure scraper, these protrusions protruding into the manure channels for the purpose of scraping the manure channels clean.

These and other features of the invention are further elucidated with reference to the accompanying drawings.
Figure 1 shows a perspective view of an embodiment of the animal accommodation floor according to the invention.
Figure 2 shows a side view of a part of the animal accommodation floor according to figure 1.
Figure 3 shows a detail view of the upper surface of a floor slab according to the invention.

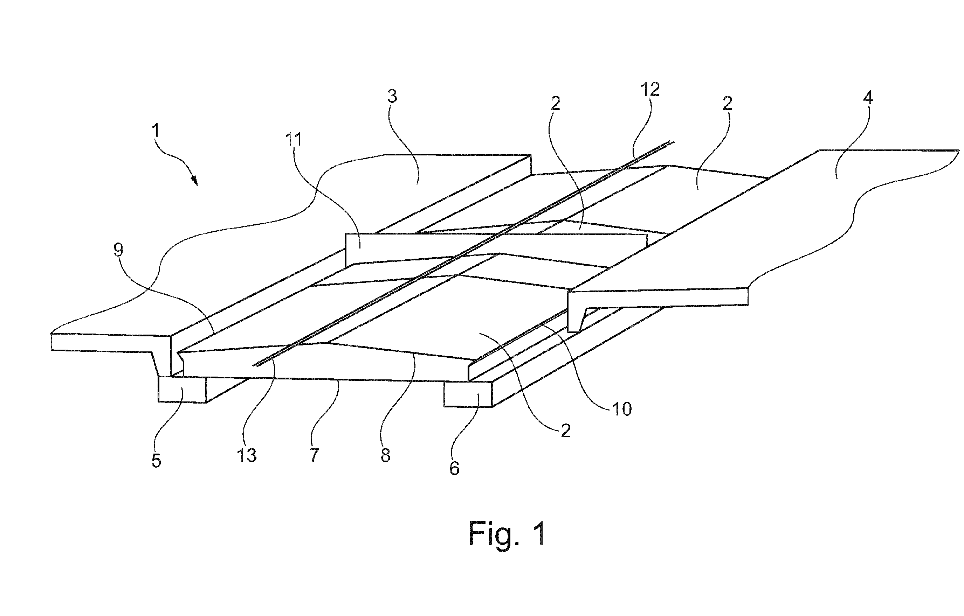

Figure 1 shows an embodiment of animal accommodation floor 1 according to the invention. Animal accommodation floor 1 has a manure passage constructed from mutually abutting floor slabs 2. Arranged on either side of floor slabs 2 are floor parts 3, 4 which provide for instance stalls or feeding locations for animals. Floor slabs 2 and floor parts 3, 4 rest on a foundation 5, 6. This foundation 5, 6 can form a manure pit but can also lie directly on a sand bed.

Floor slabs 2 have a flat underside 7. Upper side 8 slopes downward in roof-like manner so that there is a downward incline from the centre toward the two width edges 9, 10.

In the manure passage a manure scraper 11 passes over the upper side 8 of floor slabs 2, which scraper can be pulled reciprocally using cables 12, 13 in order to thus collect faeces of the animals and clean the floor slabs.

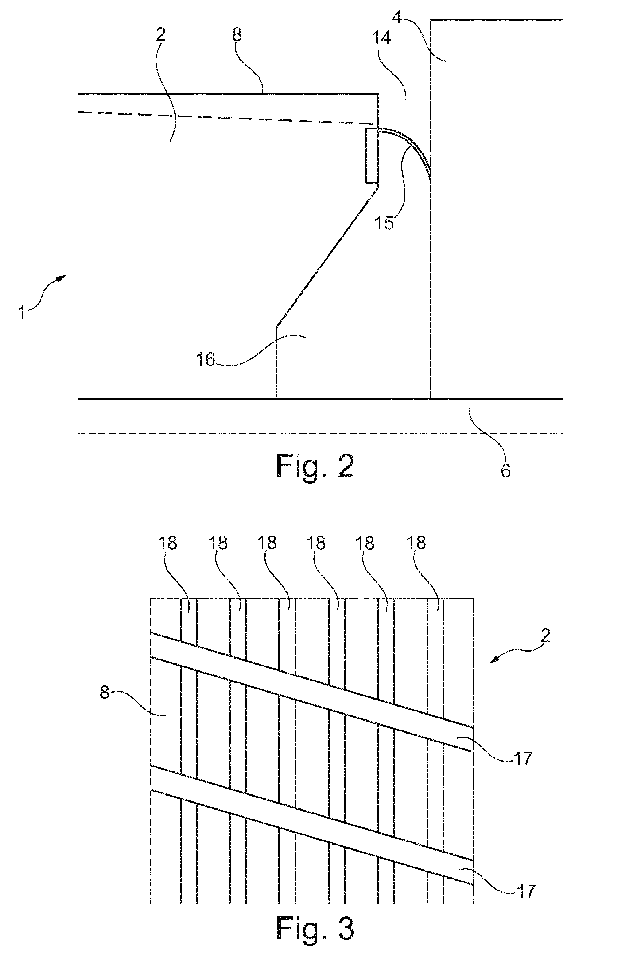

Figure 2 shows a detail of animal accommodation floor 1. It will be apparent from this figure 2 that floor slab 2 is placed some distance from floor part 4 so that an inflow gap 14 is formed on upper side 8. Provided in this inflow gap 14 is a flexible flap 15 which substantially closes inflow gap 14 to ammonia gases but allows passage of liquid such as urine.

A recess 16 is provided in width edge 10 close to underside 7 of floor slab 2, whereby a manure channel is formed. The thin fraction of the excreta of the animals is collected in this manure channel 16 and can flow to a collection point.

Figure 3 shows a detail view of the upper surface 8 of a floor slab 2. Primary grooves 17 and secondary grooves 18 are arranged in upper surface 8. Primary grooves 17 run in a herringbone pattern, with the longitudinal direction of the manure passage as central axis. Manure scraper 11 will hereby not become caught behind primary grooves 17. Secondary grooves 18 run in longitudinal direction of the manure passage.

Grooves 17, 18 provide extra grip on upper surface 8 and also provide an irrigation system for guiding the urine dropping onto floor slabs 2 to manure channel 16. Grooves 17, 18 become deeper here as seen from the central zone toward width edges 9, 10 in order to ensure a constant discharge capacity.

## Claims

1. Animal accommodation floor (1) comprising:
- a number of floor slabs (2) forming a manure passage, each floor slab being substantially rectangular and wherein the thickness of the floor slab decreases in lengthwise direction from a central zone toward the edges (9, 10) of the floor slab in order to form a downward incline toward both width edges (9, 10),
- floor parts (3, 4) arranged on either side of the manure passage for the purpose of providing stalls and/or feeding locations for animals;
**characterized in that**
the floor slabs are placed with the longitudinal edges adjacently of each other in order to form the manure passage;
and **in that** two manure channels are formed between the floor parts and the floor slabs on either side of the manure passage.

2. Animal accommodation floor as claimed in claim 1, wherein a recess (16) is provided in the width edges (9, 10) at least close to the underside and over the whole width in order to form the manure channel.

3. Animal accommodation floor as claimed in claim 1 or 2, wherein the floor slab has a flat underside (7).

4. Animal accommodation floor as claimed in any of the foregoing claims, wherein the floor slab is formed from reinforced concrete.

5. Animal accommodation floor as claimed in claim 1, further comprising a manure scraper (11) movable in longitudinal direction of the manure passage for the purpose of scraping the floor slabs clean.

6. Animal accommodation floor as claimed in claim 1, wherein protrusions are provided on both ends of the manure scraper, these protrusions protruding into the manure channels for the purpose of scraping the manure channels clean.

## Patentansprüche

1. Boden einer Tierunterbringung (1), umfassend:
- mehrere Bodenplatten (2), die einen Dungdurchgang bilden, wobei jede Bodenplatte im Wesentlichen rechteckig ist, und wobei die Dicke der Bodenplatte in der Längsrichtung von einem Zentrumsbereich zu den Rändern (9, 10) der Bodenplatte hin abnimmt, um eine Abwärtsneigung in Richtung beider Breitenkanten (9, 10) zu bilden,
- Bodenteile (3, 4), die an jeder Seite des Dungdurchgangs angeordnet sind, um Boxen und/oder Fressplätze für Tiere zu bilden;
**dadurch gekennzeichnet, dass**
die Bodenplatten derart angeordnet sind, dass die Längskanten nebeneinander liegen, um den Dungdurchgang zu bilden;
und dass zwei Dungkanäle zwischen den Bodenteilen und den Bodenplatten auf jeder Seite des Dungdurchgangs gebildet sind.

2. Boden einer Tierunterbringung nach Anspruch 1, wobei eine Vertiefung (16) in den Breitenkanten (9, 10) zur Verfügung gestellt ist, wenigstens nahe der Unterseite und über die gesamte Breite, um den Dungkanal zu bilden.

3. Boden einer Tierunterbringung nach Anspruch 1 oder 2, wobei die Bodenplatte eine ebene Unterseite (7) aufweist.

4. Boden einer Tierunterbringung nach einem der vorangehenden Ansprüche, wobei die Bodenplatte aus Stahlbeton gebildet ist.

5. Boden einer Tierunterbringungen nach Anspruch 1, ferner umfassend einen Dungkratzer (11), der zum Zwecke des Sauberkratzens der Bodenplatten in Längsrichtung des Dungdurchgangs bewegbar ist.

6. Boden einer Tierunterbringung nach Anspruch 1, wobei Vorsprünge an beiden Enden des Dungkratzers zur Verfügung gestellt sind, wobei diese Vorsprünge zum Zwecke des Sauberkratzens der Dungkanäle in die Dungkanäle hervorragen.

## Revendications

1. Sol d'étable (1) comprenant :
- un certain nombre de dalles de sol (2) formant un passage de fumier, chaque dalle de sol étant sensiblement rectangulaire et dans lequel l'épaisseur de la dalle de sol diminue dans le sens de la longueur depuis une zone centrale vers les bords (9, 10) de la dalle de sol afin de former une inclinaison vers le bas vers les deux bords en largeur (9, 10),
- des éléments de sol (3, 4) agencés de chaque côté du passage de fumier dans le but de définir des stalles et/ou des emplacements de nourriture pour animaux ;
**caractérisé en ce que**
les dalles de sol sont placées avec les bords longitudinaux en contiguïté les uns des autres afin de former le passage de fumier ;
et **en ce que** deux rigoles de fumier sont formées entre les éléments de sol et les dalles de sol de chaque côté du passage de fumier.

2. Sol d'étable selon la revendication 1, dans lequel une partie en retrait (16) est prévue dans les bords en largeur (9, 10) au moins près du dessous et sur la largeur entière afin de former la rigole de fumier.

3. Sol d'étable selon la revendication 1 ou 2, dans lequel la dalle de sol a un dessous plat (7).

4. Sol d'étable selon n'importe laquelle des revendications précédentes, dans lequel la dalle de sol est formée de béton armé.

5. Sol d'étable selon la revendication 1, comprenant en outre un racloir de fumier (11) mobile dans la direction longitudinale du passage de fumier dans le but de rendre les dalles de sol propres.

6. Sol d'étable selon la revendication 1, dans lequel des protubérances sont prévues sur les deux extrémités du racloir de fumier, ces protubérances dépassant dans les rigoles de fumier dans le but de rendre les rigoles de fumier propres.
